**Europäisches Patentamt**

**European Patent Office**

**Office européen des brevets**

(11) Veröffentlichungsnummer: **0 058 919**
**B1**

(12) # EUROPÄISCHE PATENTSCHRIFT

(45) Veröffentlichungstag der Patentschrift:
22.05.85

(51) Int. Cl.⁴: **F 16 N 15/00**

(21) Anmeldenummer: **82101140.0**

(22) Anmeldetag: **16.02.82**

(54) Verfahren zur Schmierung von Lagerstellen und Getriebeteilen.

(30) Priorität: **19.02.81 DE 3106184**

(43) Veröffentlichungstag der Anmeldung:
**01.09.82 Patentblatt 82/35**

(45) Bekanntmachung des Hinweises auf die Patenterteilung:
**22.05.85 Patentblatt 85/21**

(84) Benannte Vertragsstaaten:
**BE FR GB IT LU NL SE**

(56) Entgegenhaltungen:
**EP - A - 0 013 773**
**GB - A - 2 016 610**
**GB - A - 2 039 625**
**US - A - 3 640 858**
**US - A - 4 291 073**

**CHEMICAL ABSTRACTS, Band 85, Nr. 15, 1976,**
**Zusammenfassung 105181t, Seite 166 COLUMBUS,**
**OHIO (US) J. SUBIK u.a.: "Inhibition of the metabolism**
**of molds and yeasts by sodium dehydroacetate and**
**Preventol"**
**SAE JOURNAL , Band 61, Nr. 8 August 1953 NEW YORK**
**(US) R.J. JOHNSON: "Synthetic Lubricants give promise**
**of replacing petroleum oils to meet stringent demands of**
**aircraft turbine engines." Seite 26**
**ENGINEERING INDEX MONTHLY AND AUTHOR INDEX,**

(73) Patentinhaber: **Siemens Aktiengesellschaft, Berlin und**
**München Wittelsbacherplatz 2, D-8000 München 2 (DE)**

(72) Erfinder: **Quella, Ferdinand, Dr., Parkstrasse 9,**
**D-8035 Gauting (DE)**
Erfinder: **Hohmann, Eugen, Am Leimenberg 32,**
**D-6140 Bensheim (DE)**

(56) Entgegenhaltungen: (Fortsetzung)
**Juli 1981, Band 7 Zusammenfassung 058307 NEW YORK**
**(US)**

**Beschreibung**

Die Erfindung betrifft ein Verfahren zur Schmierung von Gleitstellen, Lagern und Getrieben bei höchsttourigen Dentalgeräten wie im Oberbegriff des Anspruchs 1 angegeben.

Schmierstoffe sollen die Reibung von einander bewegten Metallteilen soweit als möglich herabsetzen. Bei grossem Flächendruck und sich sehr schnell gegeneinander bewegenden Teilen sind besondere Schmierverfahren erforderlich. Bei der verschleissfreien Vollschmierung trennen hydrodynamische Schmierkeile die Gleitpartner.

Bisher ungelöst ist das Problem der langzeitigen Schmierung von Gleitstellen, Lagern und Kugellagern, insbesondere bei medizinischen Geräten mit sehr hohen Drehzahlen von z. B. über 20 000 U/min (z.B. Winkelstücke) bis im Extremfall von 350 000 U/min und höher bei z.B. Handstücken (Turbinen) im Dentalbereich. Das zu lösende Problem stellt folgende Anforderungen an die Schmierung:

- hydrodynamische Schmierung (Flüssigkeitsreibung),
- Haftung des Schmiermittels an der Schmierstelle auch bei hohen Zentrifugalkräften,
- hohe Temperaturstabilität des Schmiermittels und
- niedrige und konstante Viskosität des Schmiermittels auch unter Belastung.

Die übliche Schmiertechnik führte in Dauerversuchen an Turbinen nur zu kurzen Lebensdauern; die Kugellager fielen durch Fressverschleiss aus. Erstaunlicherweise erbrachten auch fluorierte Öle mit hoher thermischer Stabilität oder Kombination davon keine nennenswerte Verbesserung der Lebensdauer.

Zahnärztliche Antriebe, wie höchsttourige luftgetriebene Turbinen mit Drehzahlen bis zu 500 000 U/min, elektrisch und pneumatisch angetriebene Hand- und Winkelstücke für einen Drehzahlbereich von 100 U/min bis 200 000 U/min und Luftmotoren mit Drehzahlen bis zu 50 000 U/min benötigen zum einwandfreien verschleissarmen Lauf eine intensive Wartung der Lagerstellen und der Getriebe. Die derzeitige Wartung erfolgt durch eine täglich mehrmals durchzuführende Schmierung mittels eines unter Druck stehenden Schmiermittels aus einer Spraydose. Ebenso sind Tauchölungen, insbesondere bei Hand- und Winkelstücken, üblich.

Es ist bekannt (H. Wochnowski, B. Müssig, «Schmiertechnik und Tribologie», 27, 1980, Seiten 47 bis 50), dass Zusätze von Polymeren zu einer erheblichen Reduzierung des Verschleisses an Reibstellen führen. Die Ausnutzung dieses Effektes liegt auch handelsüblichen Epilamisierungsmitteln zugrunde. Bei allen Polymerzusätzen zu Schmierölen ist jedoch die mechanische Zerkleinerung der Polymeren (Abbau) durch Scherung ein lange bekanntes Problem. Bei Hydraulikölen gibt es sogar eine DIN 51382 zur Bestimmung des bleibenden Viskositätsabfalles durch Scherung der Polymerzusätze. Nach Wochnowski und Müssig wurde sogar beobachtet, dass polymerhaltige Öle manchmal sogar einen höheren Verschleiss als undotierte Öle ergeben und auch der scheinbare Viskositätsabfall (s. DIN 51382) dazu führen kann, dass man vom Bereich der hydrodynamischen Schmierung in das Gebiet der Mischreibung gelangt.

Die Wirksamkeit der Polymerzusätze lässt sich bei feinwerktechnischen Schmierproblemen dadurch erklären, dass man sich bei fast allen Schmierungen im Mischreibungsgebiet bewegt. In diesem Bereich spielt die Viskosität (und damit auch der Viskositätsabfall) keine Rolle. Allein chemische Eigenschaften, wie Haftung an der Oberfläche, z.B. Oberfläche der Kugeln, sind entscheidend. Das Mischreibungsgebiet darf bei hohen Drehzahlen jedoch auf keinen Fall erreicht werden, da sonst eine viel zu hohe Erwärmung durch Reibungsverluste auftritt.

Die Erfindung, wie sie in dem Anspruch 1 gekennzeichnet ist, löst das eingangs genannte Problem. Besondere Ausführungsarten der Erfindung sind in den abhängigen Ansprüchen angegeben.

Bei der Lösung nach der Erfindung wird die Kraftübertragung durch Schwingung und Scherung durch das bekannte Schmiermittel voll aufgefangen und nicht an das Fluorpolymer weitergegeben. Nach der beschriebenen Methode behandelte Kugellager erreichten bei Turbinenanwendungen, das heisst bei Drehzahlen von 350 000 U/min, eine wartungsfreie Laufzeit von bis zu 40 h. In herkömmlicher Wartungstechnik wurden lediglich Zeiten bis zu maximal 6 h erreicht.

Nach einer Weiterbildung der Erfindung findet ein Öl Verwendung, das eine Viskosität von 10 ... 150 mm²/s bei 40°C besitzt und vorzugsweise aus der Gruppe natürlicher fetter Öle stammt (z.B. Glycidester) oder ein langkettiger Mono- oder Dicarbonsäureester (z.B. Adipat, Sebacat) ist. Durch die relativ niedrige Viskosität werden innere Reibungsverluste gering gehalten.

Nach einer weiteren Ausgestaltung der Erfindung findet ein Öl Verwendung, das wenigstens teilweise flüssigkristallinen Charakter besitzt. Durch den besonderen Aufbau von flüssigkristallinen Systemen kann durch eine innere Verschiebung von Gitterschichten Energie weitgehend so aufgefangen werden, dass sie nur geringfügig auf die Polymerschicht übertragen wird.

Durch die Erfindung soll nicht nur der Wartungsaufwand der genannten Antriebe bzw. der Hand- und Winkelstücke bei zahnärztlichen Apparaturen reduziert werden, sondern auch die Besiedlung von medizinischen und Dentalgeräten mit Mikroorganismen verhindert werden. Eine nur einmal wöchentlich oder nur einmal monatlich durchzuführende Schmierung würde einerseits den Wartungsaufwand für den Anwender stark reduzieren und andererseits die Betriebssicherheit des jeweiligen Apparate-, z.B. Bohrsystems, erhöhen.

Die Lösung besteht darin, dass dem Polymer, vorzugsweise in einer Schichtdicke von 0,5 μm bis 10 μm, ein antimikrobielles Additiv, z.B. mit einer Konzentration von 1 bis 5% bezogen auf den Kunststoffanteil, zugesetzt ist.

Durch den Zusatz von antimikrobiellem Wirkstoff wird hygienischen Anforderungen Rechnung getragen, die verlangen, dass z.B. der Innenraum eines Bohrers kein Wachstum von Mikroorganismen zulässt bzw. dass das Handstück sterilisiert werden kann. Letztere Forderung im Hinblick auf eine Langzeitschmierung bedingt einen Kunststoff-Film, z.B. Fluorpolymer, und ein Öl, z.B. Adipat, Sebacat, fluoriertes Öl, die in Kombination eine Sterilisationstemperatur von 130°C aushalten.

Nach einer Weiterbildung der Erfindung wird als antimikrobieller Wirkstoff z.B. der unter dem Handelsnamen Preventol A 3 (=N-(Fluor-dichlormethyl)-phthalimid) bekannte Wirkstoff mit grosser Bandbreite zugesetzt. Dadurch wird das Wachstum von Mikroorganismen verhindert. Ein Fluorpolymer allein ist dazu aufgrund seiner geringen Verträglichkeit mit anderen organischen Zusätzen wenig geeignet. Diese Zusätze lassen sich besser in einen Film aus einem besser verträglichen Kunststoff wie Polyester, Polyoxymethylen oder Polyimid einbringen.

Wenn es nicht möglich ist, mit einer einzigen Schmierung die Schmierstellen für die gesamte Lebensdauer eines Gerätes zu erreichen, dann muss das Schmiermittel aus der Schmierstelle herausgelöst und nachträglich erneut eingebracht werden können. Bei dem hier vorliegenden Schichtaufbau Film + Öl muss zunächst der Film aufgebracht und in einem zweiten Schritt das Öl eingebracht werden. Wird eine Nachschmierung nötig, z.B. nach einem Jahr Betriebszeit im Laufe der üblichen Wartungsarbeiten, kann z.B. mit einem fluorierten Lösungsmittel der Kunststoff-Film herausgelöst werden, dann ein neuer Kunststoff-Film mit einem Spray aufgesprüht und anschliessend wieder nachgeölt werden.

Nach einer Weiterbildung der Erfindung ist das Gemisch aus gelöstem Kunststoff, z.B. Fluorpolymer und Lösungsmittel oder das Gemisch aus gelöstem Kunststoff, Lösungsmittel und antimikrobiellem Wirkstoff, z.B. Preventol A 3, zur einfachen Nachbehandlung in unter Druck stehenden Sprayflaschen eingefüllt. Auf diese Weise sind Nachbehandlungen leicht durchführbar, so dass Wartungsintervalle verlängert werden können.

Im Falle von sehr hohen Lagerbelastungen beim Anlaufen und beim Abbremsen kann es zu einem Kontakt zwischen Kugeln und Lagerring kommen. In diesen Fällen muss eine feste Schicht vorhanden sein, die einen fehlenden Schmierfilm ersetzen kann. Diese Notlaufeigenschaften werden z.B. nach einer Weiterbildung der Erfindung dadurch erreicht, dass als Unterlage des Kunststoff-Filmes eine Schicht aus Molybdänsulfid, $MoS_2$, Anwendung findet, das vorzugsweise in Schichtstärken von 0,5 μm bis 10 μm aufgebracht ist. Diese Schichtdicke lässt sich durch Aufbringen von $MoS_2$ durch Sputtern oder durch «Physical Vapor Deposition» (Bedampfen) erreichen. Diese $MoS_2$-Schicht kann als ein Reservoir für Öl und antimikrobiellen Wirkstoff dienen. Die Kombination von Kunststoff-Film und $MoS_2$-Schicht ergibt erstens die Möglichkeit, dass Öl und Wirkstoff an die Schmierstelle nachdiffundieren können und zweitens im Notfall nur die $MoS_2$-Schicht wirken kann. Im Fall eines Kunststoffs aus einem Fluorpolymer ist die direkte Diffusion durch den Kunststoff-Film gering. In diesem Fall werden Öl und Wirkstoff durch Kneten insbesondere während des Anlaufens oder Abbremsens aus ihrem Reservoir herausbefördert.

Nach einer Weiterbildung der Erfindung besteht der die gleitenden Teile, insbesondere bei Kugellagern, umfassende Käfig aus porösem Material, z.B. Phenolharz, Sinterwerkstoff, Keramik, Aluminium, Magnesium und Glaskeramik und dient als Reservoir für das Schmiermittel und den antimikrobiellen Zusatz. Es hat sich gezeigt, dass der Käfig, der in seiner einfachsten Form aus Phenolharz besteht, ein ausgezeichneter Träger für antimikrobielle Wirkstoffe ist. Der Käfig kann Öl und Wirkstoffe gemeinsam aufnehmen und langsam an die Umgebung bzw. Schmierfläche abgeben. Als weitere Materialien für den Käfig kommen Sintermetalle wie Zinn – Bronze in Frage und poröse Gläser, die alle formstabil und leicht bearbeitbar sein müssen und ein relativ geringes spezifisches Gewicht besitzen.

Ein weiteres Reservoir für Schmiermittel und antimikrobielle Wirkstoffe kann eine Beschichtung von Ringen und Kugeln mit einem porösen Material wie $MoS_2$ sein. Wird $MoS_2$ (0,5 ... 10 μm) z.B. mit Hilfe von Physical Vapor Deposition aufgebracht, besitzt das Lager Notlaufeigenschaften. Die Wirkstoffe und das Öl können aus dieser porösen Schicht nachgeliefert werden.

Die zusätzliche Kombination mit dem Kunststoff-Film ergibt weitere Möglichkeiten.

1. Öl und Wirkstoff diffundieren nach.
2. Im Normalfall wirken Kunststoff-Film und Öl.
3. Auch bei einem Fluorpolymer können Öl und Wirkstoff durch Walken aus ihrem Reservoir herausgeknetet werden.

Unter üblichen Beanspruchungen soll ein Lager mehrere Jahre halten. Auch wenn die geforderte Lebensdauer normalerweise mit einer Schmierung erreicht wird, ist bei häufiger Beanspruchung manchmal mit einer kürzeren Lebensdauer zu rechnen. Um solchen Fällen gerecht zu werden, kann im Rahmen üblicher Wartungsarbeiten, z.B. nach einem Jahr, der Fluorkunststoff und das Öl durch Sprühen mit z.B. Frigen entfernt, anschliessend erneut aufgebracht und mit Öl versehen werden. Auch dieser Fall bedeutet eine wesentliche Vereinfachung des Schmierverfahrens.

Nach einer Weiterbildung der Erfindung enthält der z.B. aus Phenolharz bestehende Käfig ein wärmeableitendes Material. In Schmierversuchen hat sich gezeigt, dass z.B. der Phenolharzkäfig besonderen thermischen Belastungen unterworfen ist, wenn er lange läuft. Während andere Materialien kaum Schäden aufweisen, ist der Käfig thermisch besonders beansprucht. Durch Zugabe von wärmeleitenden Materialien, wie z.B. Aluminiumpulver im Bereich von 0 bis 25%, kann die thermische Beanspruchung wesentlich vermindert werden.

Ausführungsbeispiel:

Die entfetteten Lager und Getriebeteile der Antriebe und Hand/Winkelstücke werden in eine Lösung eines Kunststoffes, z.B. einer Fluorpolymerlösung mit einem Masseanteil von 0,1 bis 10%, getaucht. Nach Abdunsten des leicht flüchtigen Lösungsmittels verbleibt auf den Flächen der Lager und der Getriebe ein Kunststoff-Film. Dieser Kunststoff-Film hat die Eigenschaft, nachträglich eingebrachte Schmiermittel zu halten. Für die Herstellung des Kunststoff-Filmes können herkömmliche bekannte Epilamisierungsmittel verwendet werden. Im Anschluss daran wird mit einem Glycidester (ca. 30 mm²/s bei 50°C) geschmiert.

Eine weitere Möglichkeit, die Wartungsintervalle zu verlängern, besteht im Aufbringen eines MoS₂haltigen Schmierstoffes. Zweckmässigerweise bietet sich hierbei das Aufbringen durch Sputtern oder durch Physical Vapor Deposition (PVD) mit Schichtdicken von 0,5 µm bis 10 µm an.

**Patentansprüche**

1. Verfahren zur Schmierung von Gleitstellen, Lagern und Getrieben bei höchsttourigen Dentalgeräten/zahnärztlichen Apparaturen wie zum Beispiel elektrisch oder pneumatisch angetriebenen Hand- und Winkelstücken, Kugellager für luftgetriebene Turbinen mit Drehzahlen bis zu 500 000 U/min – mit zwei Schmiermitteln, wovon das eine ein Polymer und das andere ein Öl eventuell in Verbindung mit Additiven ist, dadurch gekennzeichnet, dass auf die Schmierstelle zunächst eine Schicht aus dem Polymer, insbesondere ein Fluorpolymer, durch Tauchen aus einer Lösung mit 0,1–10% des Polymers aufgebracht und anschliessend mit einem polaren Öl geschmiert wird.

2. Verfahren nach Anspruch 1, dadurch gekennzeichnet, dass das Öl eine Viskosität von 10–150 mm²/s bei 40°C besitzt und vorzugsweise aus der Gruppe natürlicher fetter Öle stammt (z.B. Glycidester) oder ein langkettiger Mono- oder Dicarbonsäureester (z.B. Adipat, Sebacat) ist.

3. Verfahren nach den Ansprüchen 1 und 2, dadurch gekennzeichnet, dass ein Öl Verwendung findet, das wenigstens teilweise flüssigkristallinen Charakter besitzt.

4. Verfahren nach den Ansprüchen 1 bis 3, dadurch gekennzeichnet, dass dem Polymer, vorzugsweise in einer Schichtdicke von 0,5 µm bis 10 µm, ein antimikrobieller Wirkstoff, z.B. mit einer Konzentration von 1 bis 5% bezogen auf den Kunststoffanteil, zugesetzt ist.

5. Verfahren nach den Ansprüchen 1 bis 4, dadurch gekennzeichnet, dass der Kunststoff, z.B. Fluorpolymer, zum Aufbringen des Kunststoff-Filmes in leicht flüchtigen Lösungsmitteln in Masseanteilen von 0,1 bis 10% gelöst ist.

6. Verfahren nach Anspruch 4, dadurch gekennzeichnet, dass dem Polymer (z.B. Fluorpolymer) enthaltenden Lösungsmittel ein antimikrobielles Additiv, zum Beispiel N-(Fluor-dichlormethyl)-phthalimid («Preventol A3»), vorzugsweise in Konzentrationen von 0,1% bis 5% beigemischt ist.

7. Verfahren nach den Ansprüchen 1 bis 6, dadurch gekennzeichnet, dass das Gemisch aus gelöstem Kunststoff, z.B. Fluorpolymer und Lösungsmittel, oder das Gemisch aus gelöstem Kunststoff, Lösungsmittel und bakterizidem Wirkstoff, z.B. «Preventol A3», zur einfachen Nachbehandlung in unter Druck stehenden Sprayflaschen eingefüllt ist und als Spray aufgebracht wird anstelle von durch Tauchen.

8. Verfahren nach Anspruch 1, dadurch gekennzeichnet, dass als Unterlage des Kunststoff-Filmes eine Schicht aus Molybdänsulfid, MoS₂, vorzugsweise in Schichtstärken von 0,5 bis 10 µm aufgebracht und die MoS₂-Schicht mit einem antimikrobiellen Wirkstoff und Öl versehen ist.

9. Verfahren nach Anspruch 8, dadurch gekennzeichnet, dass die MoS₂-Schicht durch Sputtern oder durch «Physical Vapor Deposition» (Bedampfen) aufgebracht ist.

10. Verfahren nach Anspruch 1, dadurch gekennzeichnet, dass der die gleitenden Teile, insbesondere bei Kugellagern, umfassende Käfig aus porösem Material, z.B. ungefülltes Phenolharz, mit wärmeableitendem Material gefülltem Phenolharz, Sinterwerkstoff, Keramik, Aluminium, Magnesium, Glaskeramik, besteht und als Reservoir für das Schmiermittel und den antimikrobiellen Zusatz dient.

**Claims**

1. A method of lubricating sliding arrangements, bearings and gears in very high revolution dental devices/dentist's apparatus, such as, for example, electrically or pneumatically driven manual and angled tools, and ball bearings for air-driven turbines with speeds of up to 500,000 U/min, using two lubricating agents, one of which is a polymer and the other of which is an oil possibly in combination with additives, characterised in that at the lubrication point, there is first applied a coating of the polymer, in particular a fluoropolymer, by dipping in a solution containing 0.1–10% of the polymer, and the lubrication point is subsequently lubricated with a polar oil.

2. A method as claimed in Claim 1, characterised in that the oil has a viscosity of 10–150 mm²/s at 40°C and preferably belongs to the group of natural fatty oils (e.g. glycid esters) or is a long-chain mono- or dicarboxylic acid ester (e.g. an adipate or sebacate).

3. A method as claimed in Claims 1 and 2, characterised in that an oil is used which has at least partial liquid-crystal characteristics.

4. A method as claimed in Claims 1 to 3, characterised in that to the polymer, preferably in a layer thickness of 0,5 µm to 10 µm, there is added an anti-microbial additive, e.g. in a concentration of 1 to 5% relative to the synthetic resin component.

5. A method as claimed in Claims 1 to 4, characterised in that for application of the synthetic resin film, the synthetic resin material, e.g. the fluoropolymer, is dissolved in readily volatile solvents in amounts by weight of 0.1 to 10%.

6. A method as claimed in Claim 4, characterised in that an anti-microbial additive, for example N-(fluordichlormethyl)-phthalimide ("Preventol A3"), preferably in concentrations of 0.1% to 5%, is admixed with the solvent containing the polymer (for example a fluoropolymer).

7. A method as claimed in Claims 1 to 6, characterised in that for a simple aftertreatment, the mixture consisting of dissolved synthetic resin material, for example, a fluoropolymer, and solvent, or the mixture consisting of dissolved synthetic resin material, solvent and bactericidal additive, for example "Preventol A3", is filled under pressure into spray bottles and is applied in the form of a spray, instead of the dipping procedure.

8. A method as claimed in Claim 1, characterised in that as a base for the synthetic resin film, a layer of molybdenum sulphide, $MoS_2$, is applied in layer thicknesses of 0.5 to 10 µm and the $MoS_2$ layer is provided with an anti-microbial additive and oil.

**Revendications**

1. Procédé de lubrification d'emplacements de glissement, de paliers et de pièces de transmission des appareils de dentisterie ou des équipements de dentisterie tournant à grande vitesse, comme par exemple des pièces à main et des pièces coudées entraînées électriquement ou pneumatiquement, des roulements à billes pour des turbines entraînées par voie pneumatique à des vitesses de rotation allant jusqu'à 500 000 tours à la minute, avec deux agents de lubrification, dont l'un est un polymère et dont l'autre est une huile éventuellement associée à des additifs, caractérisé en ce qu'il consiste à déposer d'abord sur l'emplacement à lubrifier, une couche du polymère, notamment d'un polymère fluoré, par immersion dans une solution contenant de 0,1 à 10% du polymère et ensuite à lubrifier avec une huile polaire.

2. Procédé suivant la revendication 1, caractérisé en ce que l'huile a une viscosité de 10 à 150 mm²/s à 40°C et provient de préférence du groupe des huiles grasses naturelles (par exemple ester glycidylique) ou d'un ester d'acide monocarboxylique ou d'acide dicarboxylique à longue chaîne (par exemple adipate, sébaçate).

3. Procédé suivant les revendications 1 et 2, caractérisé en ce qu'il consiste à utiliser une huile qui possède au moins partiellement un caractère de cristal liquide.

4. Procédé suivant les revendications 1 à 3, caractérisé en ce qu'il consiste à ajouter au polymère, de préférence en une épaisseur de couche de 0,5 µm à 10 µm, une substance active antimicrobienne, par exemple à une concentration de 1 à 5% par rapport à la proportion de matière plastique.

5. Procédé suivant les revendications 1 à 4, caractérisé en ce qu'il consiste, pour le dépôt de la pellicule de matière plastique, à dissoudre la matière plastique, par exemple le polymère fluoré, dans des solvants très volatils en des proportions en poids de 0,1 à 10%.

6. Procédé suivant la revendication 4, caractérisé en ce qu'il consiste à ajouter au solvant contenant le polymère, (par exemple un polymère fluoré), un additif antimicrobien, par exemple le N(fluorodichlorométhyl) phtalimide («Preventol A3»), de préférence en des concentrations de 0,1 à 5%.

7. Procédé suivant les revendications 1 à 6, caractérisé en ce qu'il consiste à verser le mélange de matière plastique dissoute, de solvant, et de substance active bactéricide, par exemple de «Preventol A3», en vue de simplifier le traitement ultérieur, dans des atomiseurs et à le déposer sous la forme d'une pulvérisation au lieu de le faire par immersion.

8. Procédé suivant la revendication 1, caractérisé en ce qu'il consiste à déposer, comme couche sous-jacente à la pellicule de matière plastique, une couche de sulfure de molybdène $MoS_2$, de préférence en des épaisseurs de couche de 0,5 à 10 µm, et à munir la couche de $MoS_2$ d'une substance active antimicrobienne et d'huile.

9. Procédé suivant la revendication 8, caractérisé en ce qu'il consiste à déposer la couche de $MoS_2$ par atomisation ou par «dépôt physique en phase vapeur».

10. Procédé suivant la revendication 1, caractérisé en ce que la cage entourant les pièces de glissement, notamment dans le cas de roulements à billes, est en un matériau poreux, par exemple en résine phénolique non chargée, avec une résine phénolique chargée d'un matériau évacuant la chaleur, en matériau fritté, en céramique, en aluminium, en magnésium, en vitrocéramique, et sert de réservoir pour l'agent lubrifiant et pour l'additif antimicrobien.